# NEUE EUROPÄISCHE PATENTSCHRIFT

(11) **EP 1 610 120 B2**
(45) Veröffentlichungstag und Bekanntmachung des Hinweises auf die Entscheidung über den Einspruch: **07.10.2015**
(45) Hinweis auf die Patenterteilung: 23.09.2009
(21) Anmeldenummer: 04102877.0
(22) Anmeldetag: 22.06.2004
(51) Int. Cl.: G01N 27/28

(54) **Potentiometrische Messsonde mit aussenseitiger Beschichtung als Zusatzelektrode**
Potentiometric measuring probe with external coating as additional electrode
Sonde de mesure potentiométrique avec une couche externe comme électrode complémentaire

(43) Veröffentlichungstag der Anmeldung: 28.12.2005
(73) Patentinhaber: Mettler-Toledo AG, 8606 Greifensee (CH)
(72) Erfinder: Adami, Jean-Nicolas, 8049, Zürich (CH); Ehrismann, Philippe, 8610, Uster (CH); Bernasconi, Markus, 5033, Buchs (CH)

(56) Entgegenhaltungen:
- DE-B4- 19 818 488
- DE-C2- 19 539 763
- GB-A- 2 245 707
- US-A- 2 563 062
- US-A- 5 268 852
- US-A- 5 316 649
- US-A- 5 469 070
- US-A1- 2003 132 755
- PATENT ABSTRACTS OF JAPAN Bd. 0061, Nr. 92 (P-145), 30. September 1982 (1982-09-30) & JP 57 103044 A (SUMITOMO METAL MINING CO LTD), 26. Juni 1982 (1982-06-26)

## Beschreibung

### Technisches Gebiet

Die Erfindung betrifft eine Vorrichtung zur Durchführung potentiometrischer Messungen gemäss dem Oberbegriff des Anspruches 1.

### Stand der Technik

Eine gattungsgemässe Messsonde ist in der US 2003/0132755 A1, namentlich in der dortigen Fig. 1 und der Würdigung des Standes der Technik beschrieben. Das Ausstatten von potentiometrischen Messsonden mit einer externen, stiftförmigen Zusatzelektrode (engl. kurz als "solution ground" bezeichnet), dient unter anderem der Sensordiagnostik, beispielsweise zur Messung und Überwachung des Widerstandes eines Diaphragmas oder einer Glasmembran. Ausserdem kann eine Zusatzelektrode dazu eingesetzt werden, um eine Mess- oder Prozesslösung, in welche die Messsonden eingetaucht ist, zu erden bzw. auf ein definiertes Potential zu legen.

Ein Nachteil der bekannten Messenden besteht darin, dass die am Gehäuseunterteil angebrachte, stiftförmige Zusatzelektrode einen aufwendigen Befestigungsvorgang im Zuge der Sondenherstellung erfordert, beispielsweise ein Einschmelzen der Zusatzelektrode in das Gehäuse. Darüber hinaus stellt die aus dem Stand der Technik bekannte, am Gehäuse vorstehende Zusatzelektrode eine mechanisch exponierte Komponente der Messsonde dar, die einen zusätzlichen Platzbedarf mit sich bringt und zudem anfällig für Beschädigungen ist.

In der US 2 563 062 wird eine pH-Elektrode beschrieben, auf deren Aussenseite eine leitfähige Beschichtung aufgebracht ist, die bis unter das Niveau des zu untersuchenden Mediums im eingetauchten Zustand der Sonde reicht. Damit sollen elektrostatischen Effekte auf die Messelektronik vermieden werden.

Die US 5 316 649 offenbart eine Hochfrequenz-Bezugselektrode für elektrochemische Messungen, bei der eine Platinschicht um den Schaft aufgebracht wird und darüber eine Teflonabdeckung, wobei letztere an entgegen gesetzten Enden des Schafts ringförmige Bereiche der Platinbeschichtung frei lässt. Die Beschichtung dient der Messung des Redoxpotenzials und der Hochfrequenz-Abschirmung.

### Darstellung der Erfindung

Die Aufgabe der Erfindung besteht darin, eine verbesserte Vorrichtung zur Durchführung potentiometrischer Messungen anzugeben.
Gelöst wird diese Aufgaben durch die im Anspruch 1 definierte Vorrichtung
Die erfindungsgemässe Vorrichtung zur Durchführung potentiometrischer Messungen weist eine Messsonde mit einem aus elektrisch isolierendem Material gebildeten Gehäuse auf, das mindestens einen Hohlraum mit einem darin befindlichen Halbzellenelement enthält. Weiterhin weist die Messsonde mindestens eine Zusatzelektrode auf, die an einem zum Eintauchen in eine Mess- oder Prozesslösung vorgesehenen Eintauchbereich des Gehäuses angebracht ist und mit einer ausserhalb des Eintauchbereichs angeordneten Kontaktstelle verbunden ist. Dadurch, dass die Zusatzelektrode durch eine aussenseitig aufgetragene, elektrisch leitende Beschichtung des Gehäuses gebildet ist, ergibt sich eine kompakte Bauweise der Messsonde ohne vorstehende oder in sonstiger Weise exponierte Bauteile. Die Auftragung der Zusatzelektrode ist zudem durch gut beherrschbare, ausgereifte Beschichtungsverfahren möglich, die auch die Produktion grosser Stückzahlen erlaubt und somit letztlich auch einen kostenmässigen Vorteil ergibt.

Ferner weist die erfindungsgemässe Vorrichtung zur Durchführung potentiometrischer Messungen einen mit jedem Halbzellenelement der Messsonde sowie mit der elektrischen Kontaktstelle einer jeden Zusatzelektrode verbindbaren Messumformer auf. Der Messumformer weist Mittel zur Bestimmung eines zwischen einer Zusatzelektrode und einem anderen Teil der Vorrichtung herrschenden elektrischen Widerstands auf. Dazu gehören als Kenngrössen für die Sensordiagnostik insbesondere Diaphragma- und Membranwiderstände.

Vorteilhafte Ausgestaltungen der Erfindung sind in den abhängigen Ansprüchen definiert.

Die Verbindung zwischen der Beschichtung und der zugehörigen elektrischen Kontaktstelle kann auf verschiedene Arten, beispielsweise in Form einer Klemmverbindung realisiert werden. Vorteilhafterweise ist jedoch gemäss Anspruch 2 die Kontaktstelle mit der Beschichtung verlötet, was eine einfache, kostengünstige und zuverlässige Art der Kontaktierung darstellt.

Grundsätzlich kommen für die geometrische Form der Beschichtung verschiedene Möglichkeiten in Betracht. Insbesondere kann die Beschichtung die Form eines in Längsrichtung des Gehäuses verlaufenden Streifens haben oder ringartig um das Gehäuse verlaufend ausgebildet sein. Gemäss Anspruch 3 umgibt die Beschichtung im Wesentlichen das gesamte Gehäuse und bildet dadurch eine wirksame elektrische Abschirmung der Messsonde. Es versteht sich dabei, dass einzelne Gehäusestellen der Messsonde aus Funktionsgründen unbeschichtet bleiben müssen. Namentlich sind das Diaphragma einer Referenzelektrode und die Glasmembran einer pH-Elektrode von der Beschichtung freizuhalten. Es ist möglich, die Beschichtung als rasterförmiges Muster zu gestalten, welches trotz der vorhandenen Aussparungen eine wirksame elektrische Abschirmung in der Art eines Faraday-Käfigs erlaubt. Die im Anspruch 3 definierte Ausgestaltung ist vor allem in industriellen Anwendungen mit elektromagnetischen Störeinflüssen von Vorteil, da die elektrische Abschirmung das Auftreten von Störsignalen vermindert und die Stabilität des Messsignals verbessert. Darüber hinaus lässt die vergleichsweise grosse Oberfläche der Zusatzelektrode auch die Messung hoher Widerstände zu, was bei der Sensordiagnostik von erheblichem Vorteil ist.

Während elektrisch leitende Beschichtungen ab einer gewissen Dicke zwangsläufig keine Lichtdurchlässigkeit aufweisen, ist es möglich, durch eine vergleichsweise geringe Schichtdicke eine gewisse Lichtdurchlässigkeit zu bewahren. Die entsprechende Ausgestaltung nach Anspruch 4 ergibt demnach den wesentlichen Vorteil, dass das Innere der Messsonde sichtbar bleibt, was insbesondere im Falle der Rundum-Beschichtung nach Anspruch 3 von Vorteil ist. Es ist dann nicht erforderlich, in der Beschichtung ein Sichtfenster vorzusehen. Die visuelle Begutachtung des Sondeninneren ist bei manchen Sondentypen, beispielsweise bei Referenzelektroden mit gesättigter Elektrolytfüllung zur Feststellung des Elektrodenzustandes wichtig.

Wenngleich als Gehäusematerialien verschiedene Arten von elektrischen Isolatoren in Betracht kommen, ist es von Vorteil, wenn das Gehäuse gemäss Anspruch 5 aus Glas gebildet ist. Namentlich lassen sich dadurch wohlbekannte Beschichtungsmethoden für das Auftragen der Zusatzelektrode verwenden.

Erfindungsgemäss wird die Beschichtung mittels einer Gasphasen-Abscheidung aufgetragen, zu der namentlich die physikalische Gasphasen-Abscheidung (engl. "physical vapor deposition", PVD) und die chemische Gasphasen-Abscheidung (engl. "chemical vapor deposition", CVD) gehören. Die Anwendung solcher Abscheidungsmethoden ist im Übrigen nicht auf Glasgehäuse beschränkt.

Für die Beschichtung kommen verschiedene Materialien in Frage, die generell als Elektrodenmaterialien bekannt sind. Besonders vorteilhaft ist es, wenn die Beschichtung gemäss Anspruch 6 aus Platin gebildet ist. Platin ist gut lötbar, hat eine ausgezeichnete chemische, thermische und mechanische Beständigkeit und ist zudem für die Messung von Redoxpotentialen geeignet. Zur Bestimmung von Metallionenkonzentrationen in der Messlösung ist hingegen eine Beschichtung aus dem betreffenden Metall erforderlich.

Bei der Messsonde nach Anspruch 7 ist zwischen dem Gehäuse und der Beschichtung eine Haftschicht angebracht, wodurch sich ein unerwünschtes Ablösen der Beschichtung vermeiden lässt.

Das Material der Haftschicht richtet sich unter anderem auch nach demjenigen der Beschichtung, und ist gemäss Anspruch 8 aus Titan, Chrom, Molybdän, Tantal oder Wolfram ausgewählt. Gegebenenfalls enthält die Haftschicht zusätzlich Gold oder Palladium. Besonders bevorzugt als Haftvermittler zwischen Glas und Platin ist das für biotechnische Anwendungen unbedenkliche Titan.

Die Art des in der Messsonde befindlichen Halbzellenelementes richtet sich nach der vorgesehenen Anwendung. Insbesondere kann das Halbzellenelement gemäss Anspruch 9 als Messelektrode, beispielsweise als Glaselektrode für pH-Messungen oder als ionensensitiver ISFET-Sensor ausgebildet sein. Weiterhin kann das Halbzellenelement gemäss Anspruch 10 als Referenzelektrode ausgebildet sein. Des Weiteren kann die Messsonde gemäss Anspruch 11 als Einstabmesskette ausgebildet sein und beispielsweise eine pH-Elektrode zusammen mit einer Referenzelektrode enthalten.

Die im Anspruch 12 definierte Weiterbildung der Messsonde ist insbesondere für die Ermittlung der elektrischen Leitfähigkeit in einem Messmedium vorgesehen. Zu diesem Zweck weist die Messsonde zwei an unterschiedlichen Regionen des Eintauchbereichs angebrachte Zusatzelektroden auf, die mit je einer zugeordneten Kontaktstelle verbunden sind und die eine Messstrecke für die Messung des elektrischen Widerstandes bzw. der elektrischen Leitfähigkeit definieren.

### Kurze Beschreibung der Zeichnungen

Ausführungsbeispiele der Erfindung werden nachfolgend anhand der Zeichnungen näher beschrieben, dabei zeigen:
Fig. 1 eine als Einstabmesskette ausgebildete Messsonde, im Längsschnitt;
Fig. 2 eine mit rasterförmiger Zusatzelektrode ausgestattete Messsonde, in Seitenansicht;
Fig. 3 eine mit zwei Zusatzelektroden ausgestattete Messsonde, in Seitenansicht.

### Wege zur Ausführung der Erfindung

Übereinstimmende Merkmale sind in den verschiedenen Figuren mit denselben Bezugszeichen versehen. Aus Gründen der Anschaulichkeit ist die Dicke der Beschichtungen teilweise stark übertrieben dargestellt.

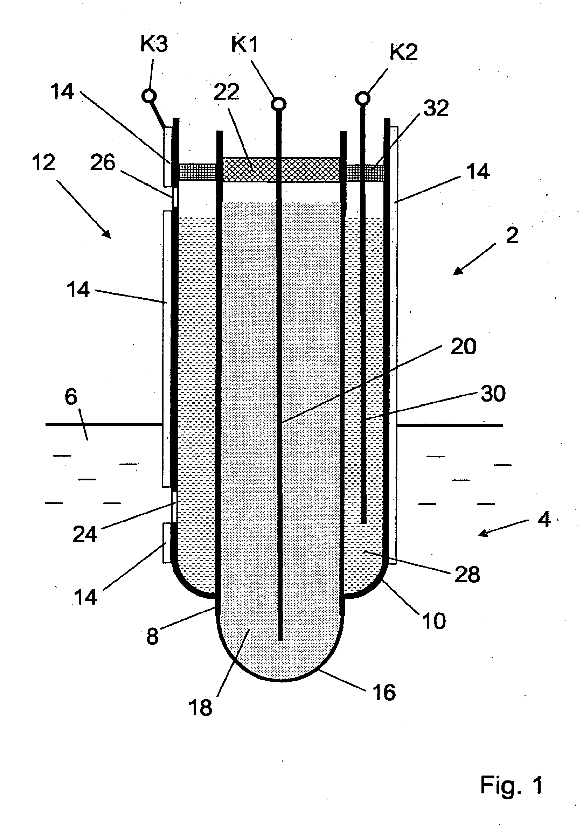

Die in der Fig. 1 dargestellte Messsonde weist ein aus Glas oder Kunststoff gefertigtes rohrförmiges Gehäuse 2 auf, dessen unteres Ende 4 in ein Messmedium 6 eingetaucht ist. Dabei beherbergt das Sondengehäuse 2 eine Zentralkammer 8 sowie eine konzentrisch um diese angeordnete Ringkammer 10. Die Zentralkammer 8 enthält ein als Glaselektrode ausgestaltetes erstes Halbzellenelement, während in der Ringkammer 10 ein als Referenzelektrode ausgestaltetes zweites Halbzellenelement untergebracht ist. Die Ringkammer 10 ist aussenseitig mit einer als Zusatzelektrode 12 wirkenden elektrisch leitenden Beschichtung 14 versehen.

Der Aufbau der beiden Halbzellenelemente ist an sich bekannt und wird nachfolgend lediglich zur Erläuterung der gesamten Messsonde beschrieben.

Die Zentralkammer 8 ist an ihrem vorstehenden unteren Ende als kalottenförmige Glasmembran 16 ausgebildet, die aus einem so genannten pH-Glas gefertigt ist. Weiterhin beinhaltet die Zentralkammer 8 eine Innenpufferlösung 18, beispielsweise eine Kaliumchlorid enthaltende wässrige Essigsäure/Azetat-Pufferlösung, in welche ein erstes Ableitelement 20, beispielsweise ein Silberdraht, eingetaucht ist. Letzterer ist über eine nicht näher dargestellte Schmelzdurchführung 22 am oberen Ende der Zentralkammer 8 zu einem Messkontakt K1 geführt.

Die Begriffe "oben" und "unten" sind hier in Bezug auf eine in ein Messmedium eingetauchte, etwa senkrecht zur Mediumsoberfläche ausgerichtete Messsonde zu verstehen, wie beispielsweise in der Figur 1 dargestellt, und sind bei einer anderen Lage der Messsonde entsprechend anzupassen.

Die Ringkammer 10 weist ist im Eintauchbereich 4 ein kreisscheibenförmiges Diaphragma 24 auf und ist zudem im obersten Teil mit einer Nachfüllöffnung 26 versehen. Weiterhin enthält die Ringkammer 10 eine Referenzelektrolytlösung 28, beispielsweise eine gesättigte Kaliumchloridlösung, in welche ein als zweites Ableitelement 30 wirkender, mit einer Silberchloridschicht bedeckter Silberdraht getaucht ist. Letzterer ist über ein oberes Abschlussteil 32 der Ringkammer 10 nach aussen zu einem Referenzkontakt K2 geführt.

Im gezeigten Beispiel bedeckt die elektrisch leitende Beschichtung 14 im Wesentlichen die gesamte Aussenwandung der Ringkammer 10. Allerdings lässt die Beschichtung 14 das Diaphragma 24 sowie die Nachfüllöffnung 26 frei. Der oberste Teil der Beschichtung 14 ist mit einem Zusatzkontakt K3 verbunden, wobei dieser vorteilhafterweise mit der Beschichtung 14 verlötet ist.

Es versteht sich, dass anstelle der hier gezeigten Messsonde auch weitere Ausgestaltungen vorgesehen werden können. Namentlich kann statt einer Einstabmesskette eine einzelne Halbzelle, beispielsweise eine Glaselektrode oder eine Referenzelektrode mit einer als Zusatzelektrode wirkenden elektrisch leitenden Beschichtung versehen werden. Des Weiteren sind zahlreiche Abwandlungen der hier gezeigten Anordnung möglich. So kann die Glasmembran anders geformt sein, beispielsweise als Kugel- oder Nadelmembran, und das Diaphragma kann als umlaufendes Ringdiaphragma ausgebildet sein. Die Referenzelektrode kann aber auch als Gelelektrode mit offener Flüssigkeitsdurchführung, d.h. ohne Diaphragma ausgestaltet sein.

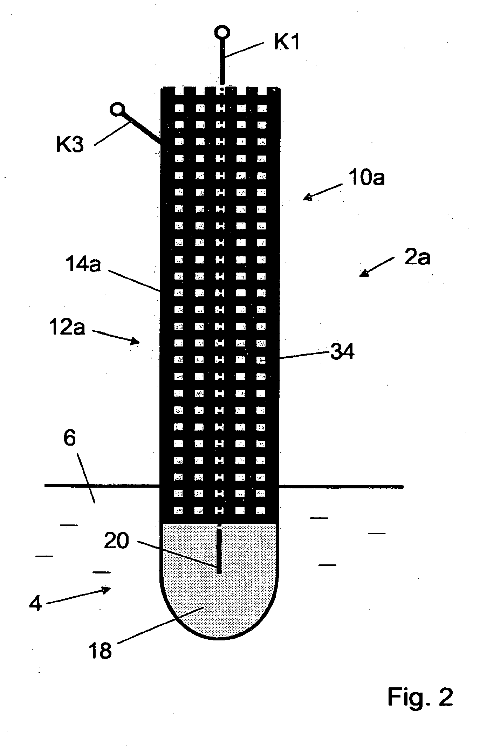

Die in der Fig. 2 dargestellte Messsonde beinhaltet eine pH-Messelektrode mit einem Gehäuse 2a, dessen unteres Ende 4 in ein Messmedium 6 eingetaucht ist. Die durch das Gehäuse 2a gebildete Sensorkammer 10a enthält eine Innenpufferlösung 18, in welche ein als Ableitelement 20 wirkender Silberdraht getaucht ist. Letzterer ist über einen nicht näher dargestellten oberen Abschlussteil der Sensorkammer 10a nach aussen zu einem Messkontakt K1 geführt. Wie aus der Fig. 2 hervorgeht, ist das Sondengehäuse 2a mit einer Zusatzelektrode 12a ausgestattet, welche durch eine rasterartige Beschichtung 14a mit einer Vielzahl von kleinen Aussparungen 34 gebildet ist. Die Beschichtung 14a lässt einen unteren Teil des Eintauchbereichs 4 frei, umgibt aber ansonsten im Wesentlichen das gesamte Sondengehäuse 10a. Der oberste Teil der Beschichtung 14a ist mit einem Zusatzkontakt K3 verlötet. Die rasterartige Beschichtung 14a wirkt wie ein Faraday-Käfig und stellt somit eine wirksame Abschirmung dar, lässt aber dennoch eine visuelle Begutachtung des Sondeninneren zu.

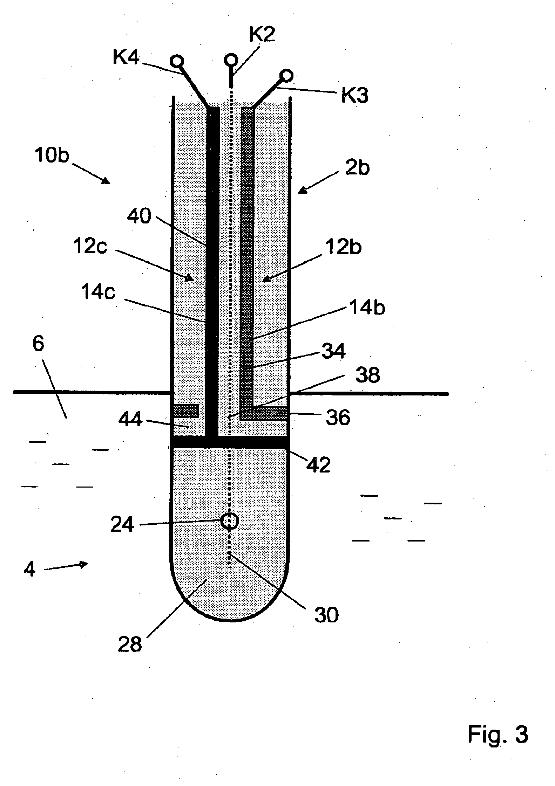

Die in der Fig. 3 dargestellte Messsonde beinhaltet eine Referenzelektrode mit einem Gehäuse 2b, dessen unteres Ende 4 in ein Messmedium 6 eingetaucht ist. Die durch das Gehäuse 2b gebildete Sensorkammer 10b enthält eine Referenzelektrolytlösung 28, in welche ein als Ableitelement 30 wirkender, mit einer Silberchloridschicht bedeckter Silberdraht getaucht ist. Letzterer ist über einen nicht näher dargestellten oberen Abschlussteil der Sensorkammer 10b nach aussen zu einem Referenzkontakt K2 geführt. Die Sensorkammer 10b ist zudem im Eintauchbereich 4 mit einem kreisscheibenförmigen Diaphragma 24 und im obersten Teil mit einer nicht näher dargestellten Nachfüllöffnung versehen. Die Messsonde weist eine erste Zusatzelektrode 12b sowie eine zweite Zusatzelektrode 12c auf; welche durch eine zugehörige erste Beschichtung 14b (in der Fig. 3 schraffiert dargestellt) bzw. zweite Beschichtung 14c (in der Fig. 3 schwarz dargestellt) gebildet sind. Beide Beschichtungen 14b, 14c verlaufen vom Eintauchbereich 4 bis hin zum oberen Ende des Sondengehäuses 2b. Die erste Beschichtung 14b ist an ihrem oberen Ende mit einem ersten Zusatzkontakt K3 verlötet; analog dazu ist die zweite Beschichtung 14c mit einem zweiten Zusatzkontakt K4 verlötet.

Die erste Beschichtung 14b umfasst einen ersten Längsstreifen 34, der vom oberen Gehäuseteil bis zum Eintauchbereich 4 verläuft und dort in einen oberen Ringstreifen 36 übergeht, wobei letzterer eine Teilung 38 aufweist. Die zweite Beschichtung 14c umfasst einen zweiten Längsstreifen 40, der ebenfalls vom oberen Gehäuseteil bis zum Eintauchbereich 4 verläuft und dort in einen unteren Ringstreifen 42 übergeht. Wie aus der Fig. 3 hervorgeht, verlaufen die beiden Längsstreifen 36, 40 im wesentlichen parallel zueinander. Der zweite Längsstreifen 40 verläuft durch die Teilung 38 des oberen Ringstreifens 36 hindurch und erreicht damit den unteren Ringstreifen 42 Zwischen den beiden Ringstreifen 36, 42 befindet sich eine unbeschichtete Zone 44, die lediglich durch den zweiten Längsstreifen 40 unterbrochen ist. Aus der Fig. 3 ist somit erkennbar, dass die erste Zusatzelektrode 12b durch den ersten Längsstreifen 34 und den geteilten, oberen Ringstreifen 36 gebildet ist; die zweite Zusatzelektrode 12c ist durch den zweiten Längsstreifen 40 und den unteren Ringstreifen 42 gebildet.

Für die Herstellung der beschichteten Messsonden wird vorteilhafterweise wie folgt vorgegangen. Das vorzugsweise aus bleifreiem Glas bestehende Sondengehäuse wird zunächst gereinigt. Anschliessend wird durch ein Sputtering-Verfahren zunächst eine dünne Haftschicht aus Titan, beispielsweise mit einer Dicke von ungefähr 5 bis 20 nm, vorzugsweise ungefähr 10 nm, aufgetragen. Schliesslich wird die eigentliche, als Zusatzelektrode wirkende Beschichtung aufgetragen. Gute Ergebnisse bezüglich elektrochemischer und mechanischer Eigenschaften lassen sich beispielsweise mit Platin einer Schichtdicke von ungefähr 200 nm erzielen. Eine teilweise durchscheinende Beschichtung wird mit einer dünneren Platinschicht von ungefähr 50 nm erreichen, ohne dass hierbei wesentliche Einbussen in anderen Eigenschaften eintreten.

Für den Einsatz bei potentiometrischen Messungen wird eine Messsonde der oben beschriebenen Art an einen entsprechenden Messumformer angeschlossen, der insbesondere mit den verschiedenen Kontaktstellen der Messsonde verbunden wird. Im Zusammenhang mit den konkret beschriebenen Messsonden können daraufhin die folgenden Operationen vorgenommen werden:
a) Potentialmessung zwischen K1 und K2 (Fig. 1): Messung des pH-Wertes;
b) Widerstandsmessung zwischen K1 und K3 (Fig. 1): Messung des Glasmembran-Widerstandes;
c) Widerstandsmessung zwischen K2 und K3 bzw. K4 (Fig. 1 bis 3): Messung des Diaphragma-Widerstandes;
d) Potentialmessung zwischen K3 und K2 (Fig. 1 bis 3): Messung eines Redoxpotentials in der Messlösung (Zusatzelektrode aus Platin) bzw. Messung einer Metallionenkonzentration in der Messlösung (Zusatzelektrode aus entsprechendem Metall);
e) Anlegen eines definierten Potentials an K3 (Fig. 1 bis 3): Erdung bzw. Potentialausgleich der Messlösung;
f) Widerstandsmessung zwischen K3 und K4 (Fig. 3): Bestimmung der elektrischen Leitfähigkeit in der Messlösung.

### Bezugszeichenliste

- 2, 2a, 2b: Sondengehäuse, Gehäuse
- 4: Eintauchbereich
- 6: Messmedium
- 8: Zentralkammer
- 10, 10a, 10b: Sensorkammer
- 12, 12a, 12b, 12c: Zusatzelektrode
- 14, 14a, 14b, 14c: Beschichtung
- 16: Glasmembran
- 18: Innenpufferlösung
- 20: Ableitelement
- 22: Schmelzdurchführung
- 24: Diaphragma
- 26: Nachfüllöffnung
- 28: Referertzelektrolytlösung
- 30: Ableitelement
- 32: oberes Abschlussteil
- 34: erster Längsstreifen
- 36: oberer Ringstreifen
- 38: Teilung von 36
- 40: zweiter Längsstreifen
- 42: unterer Ringstreifen
- 44: unbeschichtete Zone
- K1: Messkontakt
- K2: Referenzkontakt
- K3: erster Zusatzkontakt
- K4: zweiter Zusatzkontakt

## Patentansprüche

1. Vorrichtung zur Durchführung potentiometrischer Messungen, mit einer Messsonde, die ein aus elektrisch isolierendem Material gebildetes Gehäuse (2; 2a; 2b), das mindestens einen Hohlraum (8, 10; 10a; 10b) mit einem darin befindlichen Halbzellenelement enthält, umfasst, wobei die Messsonde mindestens eine Zusatzelektrode (12; 12a; 12b, 12c) aufweist, die an einem zum Eintauchen in eine Messlösung (6) vorgesehenen Eintauchbereich (4) des Gehäuses (2; 2a; 2b) angebracht ist und mit einer ausserhalb des Eintauchbereichs (4) angeordneten elektrischen Kontaktstelle (K3; K4) verbunden ist, sowie mit einem mit jedem Halbzellenelement der Messsonde sowie mit der elektrischen Kontaktstelle (K3, K4) einer jeden Zusatzelektrode (12; 12a; 12b, 12c) verbindbaren Messumformer, wobei der Messumformer Mittel zur Bestimmung eines zwischen einer Zusatzelektrode (12; 12a; 12b, 12c) und einem anderen Teil der Vorrichtung (K1, K2, K3, K4) herrschenden elektrischen Widerstands aufweist, **dadurch gekennzeichnet, dass** die mindestens eine Zusatzelektrode (12; 12a; 12b, 12c) durch eine aussenseitig aufgetragene, elektrisch leitende Beschichtung (14; 14a; 14b, 14c) des Gehäuses (2; 2a) gebildet ist, wobei diese Beschichtung (14; 14a; 14b, 14c) mittels Gasphasen-Abscheidung aufgetragen ist, nämlich physikalischer Gasphasen-Abscheidung (PVD) oder chemischer Gasphasen-Abscheidung (CVD).

2. Vorrichtung nach Anspruch 1, **dadurch gekennzeichnet, dass** die elektrische Kontaktstelle (K3; K4) mit der Beschichtung (14; 14a; 14b, 14c) verlötet ist.

3. Vorrichtung nach Anspruch 1 oder 2, **dadurch gekennzeichnet, dass** die Beschichtung (14; 14a) im Wesentlichen das gesamte Gehäuse (2; 2a; 2b) umgibt.

4. Vorrichtung nach einem der Ansprüche 1 bis 3, **dadurch gekennzeichnet, dass** die Beschichtung (14; 14a; 14b, 14c) mindestens teilweise lichtdurchlässig ist.

5. Vorrichtung nach einem der Ansprüche 1 bis 4, **dadurch gekennzeichnet, dass** das Gehäuse (2; 2a; 2b) aus Glas gebildet ist.

6. Vorrichtung nach einem der Ansprüche 1 bis 5, **dadurch gekennzeichnet, dass** die Beschichtung (14; 14a; 14b; 14c) aus Platin gebildet ist.

7. Vorrichtung nach einem der Ansprüche 1 bis 6, **dadurch gekennzeichnet, dass** zwischen dem Gehäuse (2; 2a; 2b) und der Beschichtung (14; 14a; 14b, 14c) eine Haftschicht angebracht ist.

8. Vorrichtung nach Anspruch 7, **dadurch gekennzeichnet, dass** die Haftschicht aus Titan, Chrom, Molybdän, Tantal oder Wolfram, gegebenenfalls in Kombination mit Gold oder Palladium, gebildet ist.

9. Vorrichtung nach einem der Ansprüche 1 bis 8, **dadurch gekennzeichnet, dass** das Halbzellenelement als Messelektrode (8, 16, 18, 20) ausgebildet ist.

10. Vorrichtung nach einem der Ansprüche 1 bis 8, **dadurch gekennzeichnet, dass** das Halbzellenelement als Referenzelektrode (10, 24, 28, 30) ausgebildet ist.

11. Vorrichtung nach einem der Ansprüche 1 bis 8, **dadurch gekennzeichnet, dass** die Messsonde als Einstabmesskette (8, 16, 18, 20; 10, 24, 28, 30) ausgebildet ist.

12. Vorrichtung nach einem der Ansprüche 1 bis 11, **dadurch gekennzeichnet, dass** die Messsonde zwei an unterschiedlichen Regionen des Eintauchbereichs (4) angebrachte Zusatzelektroden (12b, 12c) aufweist, die mit je einer zugeordneten Kontaktstelle (K3, K4) verbunden sind.

## Claims

1. Device for making potentiometric measurements, comprising a measuring probe with a housing (2; 2a; 2b) that is formed of an electrically insulating material and has at least one hollow space (8, 10; 10a; 10b) containing a half-cell element, wherein the measuring probe has at least one additional electrode (12; 12a; 12b, 12c) arranged on an immersible portion (4) of the housing (2; 2a; 2b) designed to be immersed in a measuring solution (6) and wherein the additional electrode (12; 12a; 12b, 12c) is connected to a contact terminal (K3; K4) that is arranged outside of the immersible housing portion (4), and further comprising a measurement converter that is connectable to each half-cell element of the measuring probe as well as to the respective electrical contact terminal (K3, K4) of each additional electrode (12; 12a; 12b, 12c), wherein the measurement converter includes means for determining an electrical resistance existing between an additional electrode (12; 12a; 12b, 12c) and another part of the device (K1, K2, K3, K4), **characterized in that** the at least one additional electrode (12; 12a; 12b, 12c) is constituted by an electrically conductive coating (14; 14a; 14b; 14c) applied to the outside of the housing (2; 2a), wherein the coating (14; 14a; 14b; 14c) is applied by deposition from the gaseous phase, namely physical vapor deposition (PVD) or chemical vapor deposition (CVD).

2. Device according to claim 1, **characterized in that** the electrical contact terminal (K3; K4) is soldered to the coating (14; 14a; 14b; 14c).

3. Device according to claim 1 or 2, **characterized in that** the coating (14; 14a) surrounds substantially the entire housing (2; 2a; 2b).

4. Device according to one of the claims 1 to 3, **characterized in that** the coating (14; 14a; 14b; 14c) is at least partially transparent.

5. Device according to one of the claims 1 to 4, **characterized in that** the housing (2; 2a; 2b) is formed of glass.

6. Device according to one of the claims 1 to 5, **characterized in that** the coating (14; 14a; 14b; 14c) is formed of platinum.

7. Device according to one of the claims 1 to 6, **characterized in that** an adhesion-enhancing layer is put between the housing (2; 2a; 2b) and the coating (14; 14a; 14b; 14c).

8. Device according to claim 7, **characterized in that** the adhesion-enhancing layer is formed of titanium, chromium, molybdenum, tantalum or tungsten, which may be used in combination with gold or palladium.

9. Device according to one of the claims 1 to 8, **characterized in that** the half-cell element is configured as a measuring electrode (8, 16, 18, 20).

10. Device according to one of the claims 1 to 8, **characterized in that** the half-cell element is configured as a reference electrode (10, 24, 28, 30).

11. Device according to one of the claims 1 to 8, **characterized in that** the measuring probe is configured as a single-rod measuring chain (8, 16, 18, 20; 10, 24, 28, 30).

12. Device according to one of the claims 1 to 11, **characterized in that** the measuring probe comprises two additional electrodes (12b, 12c) which are arranged in different areas of the immersed part (4) and which are connected to respectively associated contact terminals (K3, K4).

## Revendications

1. Dispositif pour la mise en oeuvre de mesures potentiométriques, comprenant une sonde de mesure, qui comporte un boîtier (2 ; 2a ; 2b) formé dans du matériau électro-isolant, lequel contient au moins une cavité (8, 10 ; 10a ; 10b) avec un élément à demi-cellule se trouvant à l'intérieur, la sonde de mesure présentant au moins une électrode supplémentaire (12 ; 12a ; 12b, 12c), qui est placée sur une zone d'immersion (4), prévue pour une immersion dans une solution de mesure (6), du boîtier (2 ; 2a ; 2b) et est reliée à un point de contact (K3 ; K4) électrique disposé à l'extérieur de la zone d'immersion (4), et un convertisseur de mesure pouvant être relié à chaque élément à demi-cellules de la sonde de mesure et au point de contact (K3, K4) électrique de chaque électrode supplémentaire (12 ; 12a ; 12b, 12c), le convertisseur de mesure présentant des moyens pour déterminer une résistance électrique régnant entre une électrode supplémentaire (12 ; 12a ; 12b, 12c) et une autre partie du dispositif (K1, K2, K3, K4), **caractérisé en ce que** la au moins une électrode supplémentaire (12 ; 12a ; 12b, 12c) est formée par un revêtement (14 ; 14a ; 14b, 14c), appliqué côté extérieur et électroconducteur, du boîtier (2 ; 2a), cependant le revêtement (14 ; 14a ; 14b ; 14c) est appliqué au moyen d'un dépôt en phase gazeuse, notamment d'un dépôt en phase gazeuse par procédé physique (PVD) ou d'un dépôt chimique en phase vapeur (CVD).

2. Dispositif selon la revendication 1, **caractérisé en ce que** le point de contact (K3 ; K4) électrique est soudé avec le revêtement (14 ; 14a ; 14b, 14c).

3. Dispositif selon la revendication 1 ou 2, caractérisé en que le revêtement (14 ; 14a) entoure sensiblement l'ensemble du boîtier (2 ; 2a ; 2b).

4. Dispositif selon l'une quelconque des revendications 1 à 3, caractérisé en que le revêtement (14 ; 14a ; 14b ; 14c) est au moins en partie perméable à la lumière.

5. Dispositif selon l'une quelconque des revendications 1 à 4, caractérisé en que le boîtier (2 ; 2a ; 2b) est formé en verre.

6. Dispositif selon l'une quelconque des revendications 1 à 5, caractérisé en que le revêtement (14 ; 14a ; 14b ; 14c) est formé en platine.

7. Dispositif selon l'une quelconque des revendications 1 à 6, caractérisé en qu'une couche d'adhésion est placée entre le boîtier (2 ; 2a ; 2b) et le revêtement (14 ; 14a ; 14b ; 14c).

8. Dispositif selon la revendication 7, caractérisé en que la couche d'adhésion est formée à base de titane, chrome, molybdène, tantale ou tungstène, éventuellement en combinaison avec de l'or ou palladium.

9. Dispositif selon l'une quelconque des revendications 1 à 8, **caractérisé en ce que** l'élément à demi-cellules est conçu comme électrode de mesure (8, 16, 18, 20).

10. Dispositif selon l'une quelconque des revendications 1 à 8, **caractérisé en ce que** l'élément à demi-cellules est conçu comme électrode de référence (10, 24, 28, 30).

11. Dispositif selon l'une quelconque des revendications 1 à 8, caractérisé en que la sonde de mesure est conçue comme chaîne de mesure à barre unique (8, 16, 18, 20, 10, 24, 28, 30).

12. Dispositif selon l'une quelconque des revendications 1 à 11, caractérisé en que la sonde de mesure présente deux électrodes supplémentaires (12b, 12c) placées sur différentes régions de la zone d'immersion (4), lesquelles sont reliées chacune à un point de contact (K3, K4) associé.
